# EUROPEAN PATENT APPLICATION

(11) **EP 3 232 701 A1**
(43) Date of publication of application: **18.10.2017**
(21) Application number: 17162963.7
(22) Date of filing: 27.03.2017
(51) Int. Cl.: H04W 12/00, H04W 60/00, H04L 9/32, G06F 21/10

(54) **LICENSE VERIFICATION METHOD EXECUTED VIA MOBILE DEVICE AND ASSOCIATED COMPUTER PROGRAM PRODUCT**

(30) Priority: 11.04.2016 TW 105111164
(71) Applicant: Synology Incorporated, Taipei 103 (TW)
(72) Inventor: Chan, Chih-Chun, 427 Taichung City (TW)
(74) Representative: Becker Kurig Straus

(57) **Abstract**

A license verification method executed via a mobile device (110) includes: encrypting a serial number of a target server (122) with a license to generate a license activation request, and sending the license activation request to a license activation server (130); receiving an activation result from the license activation server (130), where the activation result is generated from the license activation server (130) in response to the license activation request; and sending the activation result to the license activation server (130) for determining whether to enter an installation process associated with the license or not.

## Description

The present invention relates to a license verification method, and more particularly, to a license verification method executed by a third-party.

Servers on the market which can be used in surveillance systems usually support very few monitors. If a user requires a server which can support many monitors, she will usually have to buy a license from the manufacturer. To avoid misuse or involuntary publication of the license, the user needs to link the server to a license activation sever in an external network environment, in which the license becomes effective only when the license activation sever activates the license. The surveillance system may need to be arranged in a closed network environment for security or other reasons, making the server of the surveillance system unable to link to an external network for license activation.

This in mind, the application aims at providing a computer program product and a license verification method in order to solve the above problems.

This is achieved by a computer program product and an associated license verification method according to claims 1 and 9. The dependent claims pertain to corresponding further developments and improvements.

As will be seen more clearly from the detailed description following below, the claimed computer program product is installed in a storage unit of a mobile device. When a processor in the mobile device executes the computer program product, the computer program product makes the mobile device, a target server and a license activation server perform interactive operations. The target server is located in a closed network and cannot directly communicate with the license activation sever. The interactive operations includes: encrypting a serial number of a target server with a license to generate a license activation request, and sending the license activation request to the license activation server; receiving a license activation result from the license activation server, where the license activation result is generated from the license activation server in response to the license activation request; and sending the license activation result to the target server for determining whether to enter an installation process associated with the license.

In addition, the claimed license verification method includes: encrypting a serial number of a target server with a license to generate a license activation request, and sending the license activation request to a license activation server; receiving a license activation result from the license activation server, in which the license activation result is generated from the license activation server in response to the license activation request; and sending the license activation result to the license activation server for determining whether to enter an installation process associated with the license.

In the following, the invention is further illustrated by way of example, taking reference to the accompanying drawings. Thereof:
Fig. 1 is a diagram illustrating a system scheme according to an embodiment of the present invention;
Fig. 2 is a diagram illustrating a workflow of a system according to an embodiment of the present invention;
Fig. 3 is a diagram illustrating a system scheme according to another embodiment of the present invention; and
Fig. 4 is a diagram illustrating a workflow of a system according to another embodiment of the present invention.

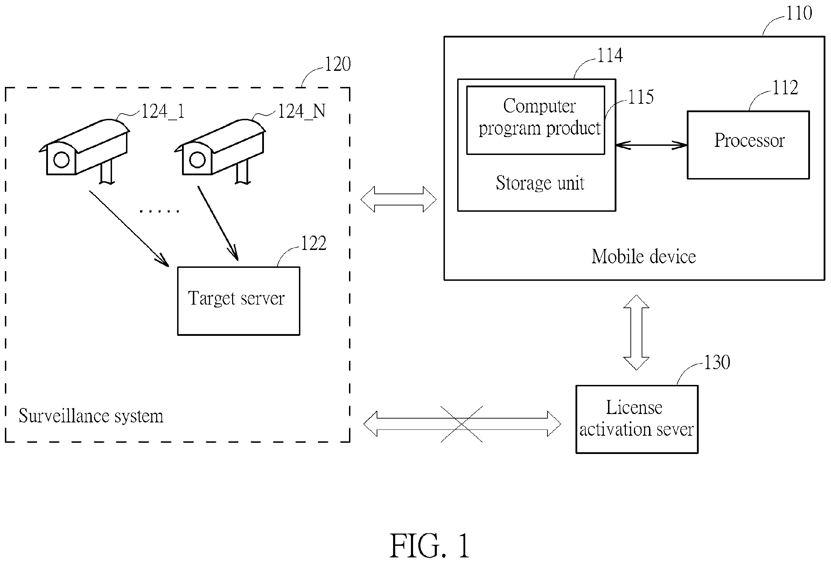

Please refer to Fig. 1, which is a diagram illustrating a system scheme according to an embodiment of the present invention. As shown in Fig. 1, the system includes a mobile device 110, a surveillance system 120, and a license activation sever 130, in which the mobile device 110 at least includes a processor 112 and a storage unit 114 storing a computer program product 115. The surveillance system 120 includes a target server 122 and a plurality of monitors 124_1 - 124_N. In this embodiment, the mobile device 110 may be a smart phone or tablet, and the computer program product 115 stored in the storage unit 114 may be a mobile application (APP) downloaded from another server. The operations in the following embodiments of the present invention can be performed via using the processor 112 to execute the computer program product 115. Further, the surveillance system 120 may be a closed network system. In other words, the surveillance system 120 cannot link to the license activation sever 130 through the Internet.

In this embodiment, the target server 122 includes some functions related to the surveillance system. For example, the target server 122 may receive images from a plurality of monitors 124_1 - 124_N, and process the images in order to display the images on a screen or store the images into a hard disk. The target server 122 may be an all-in-one server. For example, in addition to the functions related to the surveillance system, the target server 122 may be used as a file server, web page server, Remote Authentication Dial-In User Service (RADIUS) server, Remote Access Virtual Private Network (VPN) server, proxy server, etc., such as the servers "DiskStation" and "Network Video Recorder (NVR)" provided by Synology^{™}_{.}

Since the surveillance system 120 is located in a closed network, when the number of monitors in the surveillance system 120 needs to be increased, the license purchased by the user of the surveillance system 120 cannot directly be activated by the license activation sever 130 through the network. Hence, the embodiment of Fig. 1 utilizes a third-party (i.e. the mobile device 110) to activate the license, in which the step of activating the license and the step of installing monitors are separated, i.e. the two steps are not performed at the same time. The activation of the license does not take place during the installation of the monitors, in order to avoid misuse of the license.

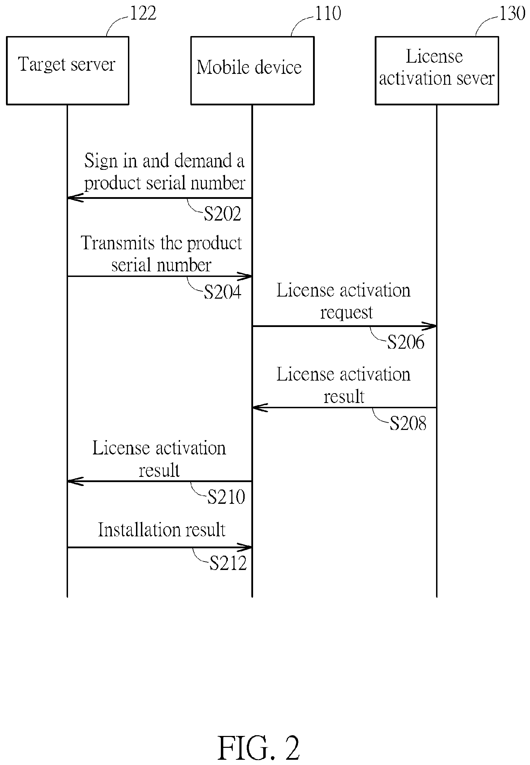

Please refer to Figs. 1 and 2 together. Fig. 2 is a diagram illustrating a workflow of a system according to an embodiment of the present invention. In Step S202, the mobile device 110 utilizes WiFi or another wireless communications technique to sign in the closed local area network where the surveillance system 120 is located. Then, the mobile device 110 sends a request to the target server 122 to demand a unique code from the target server 122, in which the unique code may be the product serial number of the target server 122, or another type of code. In the following descriptions, the unique code is illustrated as a product serial number. In Step S204, after the request is received, the target server 122 transmits the product serial number to the mobile device 110. In Step S206, the user inputs the license to the mobile device 110, and the mobile device 110 encrypts the product serial number of the target server 122 to generate a license activation request, and transmits the license activation request to the license activation sever 130 via 3G/4G or another connecting method. In Step S208, the license activation sever 130 decrypts the received license activation request, and then determines whether the license is effective in order to generate a license activation result, and outputs the license activation result to the mobile device 110. In this embodiment, the license activation sever 130 refers to the number of times the license is used, or the number of times the license is requested to be activated, to determine whether the license is effective or not. For example, if the number of times the license is used is lower than 10, the license activation sever 130 will determine that the license is effective; otherwise, the license activation sever 130 will determine that the license is not effective. The contents of the license activation result may include the license, information indicating whether the license is effective, the product serial number of the target server 122, the time stamp, etc. The license activation sever 130 utilizes a private key to encrypt the above contents for generating the license activation result. In Step S210, the mobile device 110 transmits the received license activation result to the target server 122. In Step S212, the target server 122 uses another private key that pairs to the aforementioned private key (i.e. the private key for encrypting) to decrypt the license activation result, and refers to the license activation result to decide whether to perform the installation of monitors. Specifically, only under the situation where the product serial number in the license activation result matches the product serial number of the target server 122, the license is effective, and the difference between the time stamp and the current time point does not exceed the time range for installation, will the target server 122 decide to perform the monitor installation process for this license. Finally, the target server 122 displays the monitor installation result on a screen of the target server 122 or sends it back to the mobile device 110.

The aforementioned private keys in the target server 122 and license activation sever 130 may be preset therein or generated via specific algorithms before the products leave the factory.

In the work flow of Fig. 2, since the license activation result is encrypted with the private key, a person cannot generate the license activation result for the target server 122 to perform the monitor installation process by herself. In addition, even if a person intercepts the license activation result transmitted to the target server 122 from the mobile device 110, since this license activation result has a limited time period and needs to determine the product serial number, only the previously verified target server 122 can use this license to perform the monitor installation process. Hence, misuse due to involuntary publication can be prevented.

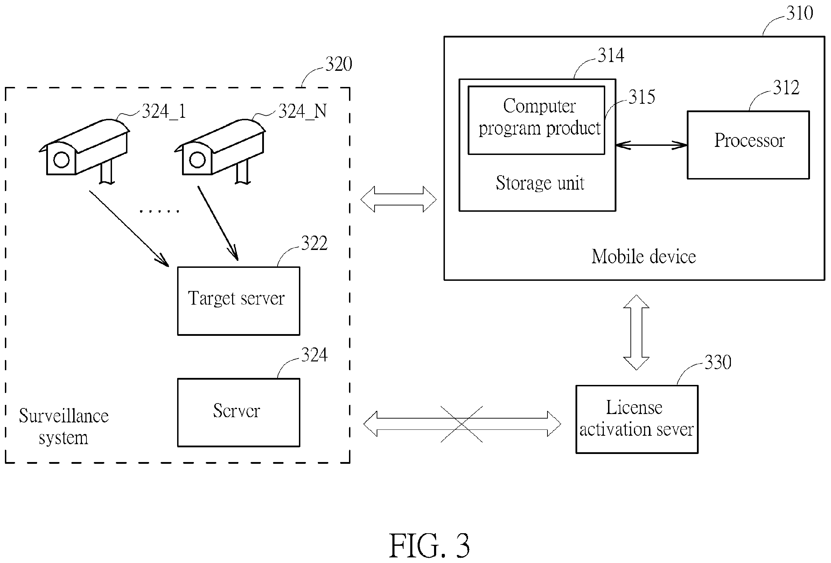

Please refer to Fig. 3, which is a diagram illustrating a system scheme according to another embodiment of the present invention. As shown in Fig. 3, the system includes a mobile device 310, a surveillance system 320, and a license activation sever 330, in which the mobile device 310 at least includes a processor 312 and a storage unit 314 storing a computer program product 315. The surveillance system 320 includes a target server 322, a server 324 and a plurality of monitors 324_1 - 324_N. In this embodiment, the mobile device 310 may be a smart phone or a tablet. The computer program product 315 stored in the storage unit 314 may be a mobile application (APP) downloaded from another server. The following operations of this embodiment can be performed by utilizing the processor 312 to execute the computer program product 315. Further, the surveillance system 320 is a closed network system, meaning the surveillance system 320 cannot connect to the license activation sever 330 through the Internet.

In this embodiment, both the target servers 322 and server 324 include associated functions of the surveillance system, i.e. the target server 322 and/or server 324 may receive images from a plurality of monitors 324_1 - 324_N, and then process the monitored images in order to display the images on a screen or store the images in a hard disk.

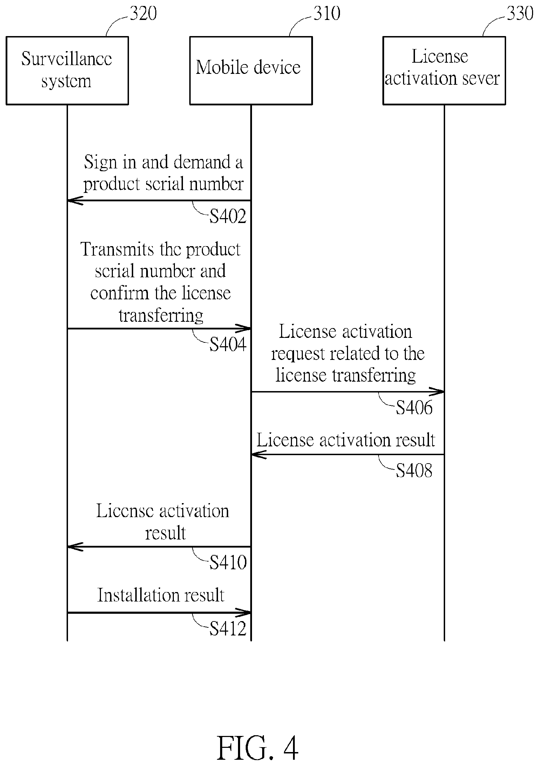

Please refer to Figs. 3 and 4 together. Fig. 4 is a diagram illustrating a workflow of a system according to another embodiment of the present invention. Specifically, Fig. 4 illustrates a scenario when the user wants to transfer the license previously used in the server 324 to the target server 322, and a third-party (i.e. the mobile device 310) is utilized to transfer the license. In Step S402, the mobile device 310 signs into the closed local area network of surveillance system 320 through WiFi or other wireless communications technologies, and respectively transmits requests to the target server 322 and the server 324 to obtain respective unique codes of the target server 322 and the server 324, in which the unique codes may be the product serial numbers of the target server 322 and the server 324. In the following description, the product serial number is used as an example of the unique codes. In addition, the mobile device 310 also sends a license transferring request to the server 324 to demand to transfer the license which is currently used in the server 324. In Step S404, after receiving the request, the target server 322 transmits the product serial number to the mobile device 310, and the server 324 transmits the product serial number and a license transferring confirmation message to the mobile device 310. In Step S406, the mobile device 310 encrypts the product serial number of the target server 322, the product serial number of the server 324, and the license to be transferred, in order to generate a license activation request, and transmits the license activation request to the license activation sever 330 via 3G/4G. In Step S408, the license activation sever 330 decrypts the received license activation request and then determines whether the license therein is effective, in order to generate and output a license activation result to the mobile device 310. Note that, in this embodiment, the license activation sever 330 refers to the number of times the license is used or the number of times the license requests to be activated, to determine whether the license is effective or not. The contents of the license activation result may include the license, information indicating whether the license is effective, the product serial number of the target server 322, the time stamp, etc. The license activation sever 330 will use a private key to encrypt the aforementioned contents for generating the license activation result. In Step S410, the mobile device 310 transmits the received license activation result to the target server 322. In Step S412, the target server 322 utilizes another private key to decrypt the license activation result, and refers to the license activation result to decide whether to perform the monitor installation process. Specifically, only under the situation where the product serial number of license activation result matches the product serial number of the target server 322, the license is effective, and the difference between the time stamp and the current time point does not exceed a predetermined installation time range, will the target server 322 decide to perform the monitor installation process upon the license transferred from the server 324. Finally, the target server 322 displays the installation result on a screen of the target server 322, or sends it back to the mobile device 310.

To summarize, the present invention provides a license activation method executed by a third-party, in which the third-party is activated by the license, and the step of activating the license is separated from the step of installing the monitors. Hence, misuse of the license can be prevented without sacrificing the user experience.

## Claims

1. A computer program product (115), installed in a storage unit (114) of a mobile device (110), where when a processor (112) in the mobile device (110) executes the computer program product (115), the computer program product (115) makes the mobile device (110), a target server (122) and a license activation server (130) perform interactive operations, wherein the target server (122) is located in a closed network and cannot directly communicate with the license activation sever, and the interactive operations controlled by the computer program product (115) is **characterized by**:
encrypting a serial number of a target server (122) with a license to generate a license activation request, and sending the license activation request to the license activation server (130);
receiving a license activation result from the license activation server (130), where the license activation result is generated from the license activation server (130) in response to the license activation request; and
sending the license activation result to the target server (122) for determining whether to enter an installation process associated with the license.

2. The computer program product (115) of claim 1, **characterized in that** the mobile device (110) is a smart phone or a tablet, and the computer program product (115) is a mobile application (APP).

3. The computer program product (115) of claim 1, **characterized in that** the target server (122) is applied to a surveillance system (120) and the license is arranged to increase a number of monitors (124) supported by the surveillance system (120).

4. The computer program product (115) of claim 1, **characterized in that** the computer program product (115) further comprises:
connecting the mobile device (110) to the target server (122) to obtain the serial number of the target server (122).

5. The computer program product (115) of claim 1, **characterized in that** the license activation result is an encrypted message and the mobile device (110) is unable to decrypt the encrypted message.

6. The computer program product (115) of claim 5, **characterized in that** the license activation result at least comprises the license, information indicating whether the license is effective, and the serial number of the target server (122).

7. The computer program product (115) of claim 5, **characterized in that** the license activation result at least comprises the license, information indicating whether the license is effective, and a time stamp.

8. The computer program product (115) of claim 1, **characterized in that** when the processor (112) in the mobile device (110) executes the computer program product (115), the computer program product (115) makes the mobile device (110) and another sever perform interactive operations, and the step of generating the license activation request comprises:
encrypting the serial number of the target server (122), a serial number of the other server, and the license, to generate the license activation request, and sending the license activation request to the license activation sever.

9. A license verification method executed via a mobile device (110), the license verification method **characterized by**:
encrypting a serial number of a target server (122) with a license to generate a license activation request, and sending the license activation request to a license activation server (130);
receiving a license activation result from the license activation server (130), wherein the license activation result is generated from the license activation server (130) in response to the license activation request; and
sending the license activation result to the license activation server (130) for determining whether to enter an installation process associated with the license.

10. The license verification method of claim 9, **characterized in that** the target server (122) is applied to a surveillance system (120) and the license is arranged to increase a number of monitors (124) supported by the surveillance system (120).

11. The license verification method of claim 9, **characterized in that** the license activation result is an encrypted message and the mobile device (110) cannot decrypt the encrypted message.

12. The license verification method of claim 11, **characterized in that** the license activation result at least comprises the license, information indicating whether the license is effective, and the serial number of the target server (122).

13. The license verification method of claim 11, **characterized in that** the license activation result at least comprises the license, information indicating whether the license is effective, and a time stamp.

14. The license verification method of claim 9, **characterized in that** the step of generating the license activation request comprises:
encrypting the serial number of the target server (122), a serial number of the other server, and the license, to generate the license activation request, and sending the license activation request to the license activation sever.

15. The computer program product (115) of claim 8 and the license verification method of claim 14, **characterized in that** the target server (122) and the other server are applied to a surveillance system (120), and the license is arranged to increase a number of monitors (124) supported by the surveillance system (120), and is used by the other server.
